# EUROPÄISCHE PATENTSCHRIFT

(11) **EP 4 244 491 B1**
(45) Veröffentlichungstag und Bekanntmachung des Hinweises auf die Patenterteilung: **22.05.2024**
(21) Anmeldenummer: 22710029.4
(22) Anmeldetag: 01.03.2022
(51) Int. Cl.: F16B 21/06, F16L 37/084

(54) **VERBINDUNGSANORDNUNG**
CONNECTION ARRANGEMENT
SYSTÈME DE LIAISON

(30) Priorität: 10.03.2021 DE 102021105753
(43) Veröffentlichungstag der Anmeldung: 20.09.2023
(73) Patentinhaber: Elkamet Kunststofftechnik GmbH, 35216 Biedenkopf (DE)
(72) Erfinder: DEUSSEN, Martin, 35039 Marburg (DE); KLEIN, Michael, 35116 Hatzfeld-Reddighausen (DE); ORTMÜLLER, Michael, 35232 Dautphetal-Herzhausen (DE); SCHOCH, Andreas, 35037 Marburg (DE)
(74) Vertreter: DREISS Patentanwälte PartG mbB
(86) Internationale Anmeldenummer: PCT/EP2022/055137
(87) Internationale Veröffentlichungsnummer: WO 2022/189210

(56) Entgegenhaltungen:
- WO-A1-2010/081943

## Beschreibung

Die Erfindung betrifft eine Verbindungsanordnung, mit einer ersten Baugruppe und mit einer zweiten Baugruppe, wobei an der ersten Baugruppe ein elastisch verformbares Rastelement angeordnet ist, das zur lösbaren Verrastung der ersten Baugruppe und der zweiten Baugruppe dient und das sich während einer Montage der beiden Baugruppen in eine Montagelage verformt und nach Abschluss der Montage einen Hinterschnitt bildet, der einer Demontage der beiden Baugruppen entgegenwirkt.

Solche Verbindungsanordnungen sind auch als Rastverbindungen bekannt. Durch entsprechende Ausgestaltung des Rastelements (bspw. weicher oder härter) können bedarfsweise niedrigere oder höhere Haltekräfte realisiert werden, welche die beiden Baugruppen in dem montierten Zustand der Verbindungsanordnung aneinander halten. Höhere Haltekräfte korrespondieren jedoch mit entsprechend hohen Demontagekräften und können mit dem Risiko einhergehen, dass das Rastelement bei der Demontage beschädigt wird.

Aus der WO 2010/081943 A1 ist eine Verbindungsanordnung bekannt.

Ausgehend von einer Verbindungsanordnung der eingangs genannten Art liegt der vorliegenden Erfindung die Aufgabe zugrunde, - unter Beibehaltung der grundsätzlichen Vorteile einer wiederholbar lösbaren Rastverbindung - hohe Haltekräfte mit niedrigen Demontagekräften kombinieren zu können.

Diese Aufgabe wird bei einer Verbindungsanordnung der eingangs genannten Art dadurch gelöst, dass die erste Baugruppe einen Anschlag aufweist, der bewegbar ist zwischen einer die Aufrechterhaltung des Hinterschnitts des Rastelements unterstützenden Wirkstellung, in welcher das Rastelement an dem Anschlag anliegt und/oder in welcher das Rastelement an den Anschlag heran verformbar ist, und einer Demontagestellung, in welcher der Anschlag bezogen auf die Wirkstellung weiter von dem Rastelement beabstandet angeordnet ist und in welcher das Rastelement zur Demontage der beiden Baugruppen in eine Demontagelage verformbar ist.

Der Anschlag der ersten Baugruppe kann relativ zu dem Rastelement zwei definierte Stellungen einnehmen. In einer Wirkstellung dient der Anschlag als Stützelement, welches das Rastelement stabilisiert, das somit hohe Haltekräfte ausüben kann. In der Demontagestellung ist der Anschlag, bezogen auf die Wirkstellung und vorzugsweise in einer Richtung parallel zu einer nachstehend noch näher erläuterten Montageachse oder Montageebene der Verbindungsanordnung, weiter von dem Rastelement beabstandet angeordnet, sodass ein Freiraum bereitgestellt wird. Dieser Freiraum ermöglicht es, dass sich das Rastelement - von dem Anschlag im Wesentlichen ungehindert - in seine Demontagelage verformen kann, wodurch eine Demontage der beiden Baugruppen mit niedrigen Demontagekräften ermöglicht wird.

Es versteht sich, dass sich die genannte Bewegung des Anschlags auf eine Relativbewegung zu dem Rastelement bezieht. Demnach ist eine Überführung des Anschlags aus der Wirkstellung in die Demontagestellung damit verbunden, dass (bezogen auf absolute, ruhende Raumkoordinaten) entweder nur der Anschlag bewegt wird oder dass nur das Rastelement bewegt wird oder dass sowohl der Anschlag als auch das Rastelement bewegt werden.

Die genannten Bewegungen finden vorzugsweise entlang einer insbesondere geraden Montageachse oder entlang einer Montageebene statt, entlang welcher die erste Baugruppe und die zweite Baugruppe von einem demontierten Zustand ausgehend in den Montagezustand überführt werden und entlang welcher die beiden Baugruppen während der Demontage wieder voneinander entfernt werden.

Vorzugsweise sind das Rastelement und der Anschlag in der Wirkstellung und in der Demontagestellung relativ zueinander fixiert. Hierbei sind das Rastelement und der Anschlag an der ersten Baugruppe gehalten, oder nur eines der beiden Bauteile ist an der ersten Baugruppe gehalten, während auf das andere der beiden Bauteile eine Betätigungskraft ausgeübt wird, welche dieses Bauteil in einer definierten Lage fixiert.

Es ist bevorzugt, wenn die erste Baugruppe einen Anschlagträger aufweist, an welchem der Anschlag angeordnet ist, und einen Rastelementträger, an welchem das Rastelement angeordnet ist, und wenn der Rastelementträger und der Anschlagträger über einen Lagerbereich relativ zueinander bewegbar verbunden sind.

Es ist möglich, dass das Rastelement und der Rastelementträger miteinander verbunden sind, insbesondere durch Form- und/oder Stoffschluss. Das Rastelement und der Rastelementträger können als Baugruppe in einem Spritzgießverfahren hergestellt sein, insbesondere als Zweikomponenten-Baugruppe in einem 2K-Spritzgießverfahren.

Der Lagerbereich definiert vorzugsweise eine Relativbewegungsachse oder eine Relativbewegungsebene, entlang welcher der Anschlagträger und der Rastelementträger relativ zueinander bewegbar sind. Vorzugsweise entspricht diese Relativbewegungsachse oder diese Relativbewegungsebene der Montageachse oder der Montageebene, entlang welcher die beiden Baugruppen während einer Montage miteinander gefügt und während einer Demontage voneinander entfernt werden.

Bevorzugt ist es, wenn der Lagerbereich ein Schraubgewinde und/oder eine Linearführung aufweist. Sowohl das Schraubgewinde als auch die Linearführung ermöglichen eine Führung von Anschlagträger und Rastelementträger in einer Richtung quer zu einer Montageachse bzw. Montageebene der Verbindungsanordnung. Ein Schraubgewinde hat darüber hinaus den Vorteil, dass der Anschlagträger und der Rastelementträger entlang eines Relativbewegungsbereichs, also zwischen der Wirkstellung und der Demontagestellung des Anschlags, in jeder beliebigen Zwischenlage relativ zueinander fixiert sind, ohne dass hierfür die Ausübung einer Betätigungskraft erforderlich ist.

Der Anschlag kann durch eine Anschlagfläche des Anschlagträgers gebildet sein, oder der Anschlag ist durch ein zu dem Anschlagträger separates Bauteil bereitgestellt. Unabhängig davon ist es bevorzugt, wenn der Anschlagträger, der Anschlag und der Rastelementträger aus einem festen Material, beispielsweise aus Kunststoff oder aus Metall, hergestellt sind, und wenn ausschließlich das Rastelement aus einem elastisch verformbaren Material, insbesondere aus einem Elastomer hergestellt ist.

Bei einer bevorzugten Ausführungsform weist die erste Baugruppe eine Feder auf, welche auf den Anschlagträger und/oder den Rastelementträger wirkt, sodass der Anschlag in die Wirkstellung gedrängt wird. Dies ermöglicht die Definition einer Vorzugsrelativlage zwischen Anschlagträger und Rastelementträger, wobei die Feder den zusätzlichen Vorteil hat, in dem montierten Zustand der Verbindungsanordnung die Haltekräfte des Rastelements zu unterstützen. Für eine Demontage der beiden Baugruppen muss aber dennoch lediglich die von der Feder ausgeübte Kraft überwunden werden, sodass der Anschlag seine Demontagestellung einnehmen kann, wodurch wiederum eine von dem Anschlag ungehinderte Verformung des Rastelements in dessen Demontagelage ermöglicht wird.

Eine bevorzugte Ausführungsform sieht vor, dass die erste Baugruppe eine Betätigungseinrichtung aufweist, mit welcher der Anschlag in die Demontagestellung überführbar und vorzugsweise in der Demontagestellung fixierbar ist. Die Betätigungseinrichtung ermöglicht eine gesteuerte, kontrollierte und auch von der Orientierung der Verbindungsanordnung relativ zur Schwerkraft unabhängige Überführung des Anschlags in die Demontagestellung. Diese Überführung findet vorzugsweise in einer Richtung parallel zu der Montageachse oder Montageebene der Verbindungsanordnung statt. Die Betätigungseinrichtung ermöglicht außerdem die Fixierung des Anschlags in der Demontagestellung.

Die Betätigungseinrichtung umfasst in vorteilhafter Weise einen Druckbolzen oder Gewindebolzen und/oder eine Druckhülse oder Gewindehülse. Ein Druckbolzen und eine Druckhülse haben den Vorteil einer besonders einfachen Handhabung, wobei eine Betätigungskraft durch eine auf den Bolzen oder auf die Hülse ausgeübte Druckkraft erzeugt wird. Ein Gewindebolzen und eine Gewindehülse haben den Vorteil, dass eine Relativlage zwischen Anschlag und Rastelement auch in Zwischenstellungen fixiert ist.

Zur weiteren Vereinfachung der Handhabung der Verbindungsanordnung wird vorgeschlagen, dass der Anschlagträger und/oder der Rastelementträger mindestens eine Handhabungsfläche und/oder mindestens eine Werkzeugangriffsfläche aufweist oder aufweisen.

Bei einer Handhabungsfläche kann es sich beispielsweise um eine Riffelfläche handeln, welche eine einfache Handhabung, insbesondere eine Verdrehung des Anschlagträgers und/oder des Rastelementträgers von Hand ermöglicht. Bei einer Werkzeugangriffsfläche handelt es sich vorzugsweise um eine Angriffsfläche für einen Schraubenschlüssel oder einen Schraubendreher.

Ferner ist es bevorzugt, wenn die zweite Baugruppe eine Anlagefläche zur Anlage an dem Anschlagträger oder zur Anlage an dem Rastelementträger aufweist. Dies ermöglicht es in einfacher Art und Weise, die Position des Anschlagträgers oder des Rastelementträgers in dem Montagezustand der Verbindungsanordnung zu definieren, was wiederum die Definition der Relativlage zwischen Anschlagträger und Rastelementträger vereinfacht.

Es ist möglich, dass die vorstehend genannte Anlagefläche ein integraler, unbewegbarer Bestandteil der zweiten Baugruppe ist. Es ist aber auch möglich, dass die Anlagefläche bewegbar an der zweiten Baugruppe angeordnet ist, insbesondere zwecks Ausgleichs eines Montagespiels zwischen den beiden Baugruppen.

Besonders bevorzugt ist es, wenn der Anschlagträger oder der Rastelementträger an einem Rohrstutzen angeordnet ist oder durch einen Rohrstutzen bereitgestellt ist. Dies ermöglicht eine einfache Anordnung eines insbesondere ringförmigen Rastelements und/oder eines insbesondere ringförmigen Anschlags, welche sich in Umfangsrichtung um eine Montageachse der Verbindungsanordnung herum erstrecken.

Es ist ferner bevorzugt, wenn eine der beiden Baugruppen mindestens einen Anschlussstutzen aufweist. Dieser Anschlussstutzen kann in einfacher Weise mit der anderen der beiden Baugruppen verbunden werden, insbesondere indem der Anschlussstutzen bezogen auf eine Außenseite der anderen Baugruppe ausschließlich von der Außenseite her montiert (und demontiert) wird, ohne dass ein Zugriff im Bereich einer Innenseite der anderen Baugruppe erfolgt bzw. erforderlich ist.

Ein Anschlussstutzen kann vorzugsweise auch eine Kabeldurchführung bilden, für welche eine vorstehend genannte einseitige Montagemöglichkeit (und Demontagemöglichkeit) ebenfalls bevorzugt ist.

Insbesondere weist eine der beiden Baugruppen einen Behälter, beispielsweise einen Fluidbehälter oder einen Schaltschrank, mit mindestens einer Öffnung zur Aufnahme eines Anschlussstutzens oder eine Kupplung mit mindestens einer Öffnung zur Aufnahme eines Anschlussstutzens auf.

Besonders bevorzugt ist es, wenn der Anschlussstutzen eine Fluidleitung aufweist, sodass Fluid durch den Anschlussstutzen hindurch beispielsweise in den vorstehend genannten Behälter oder beispielsweise in die vorstehend genannte Kupplung eingeführt oder ausgeleitet werden kann.

Die Fluidleitung erstreckt sich vorzugsweise entlang einer Montageachse der Verbindungsanordnung. Somit kann Fluid aus dem Anschlussstutzen beispielsweise in den Behälter oder beispielsweise in die Kupplung eingeleitet werden, wobei eine Fluidleitungsachse mit der Montageachse der Verbindungsanordnung korreliert, was eine intuitive Montage und Demontage der Verbindungsanordnung unterstützt.

Es ist möglich, dass die erste Baugruppe und die zweite Baugruppe mittels eines Dichtelements gegeneinander abgedichtet sind. Ein solches Dichtelement kann separat bereitgestellt sein oder durch das Rastelement gebildet sein.

Bei einer weiteren bevorzugten Ausführungsform weist die erste Baugruppe einen Gegenhalter zur Anlage an der zweiten Baugruppe auf, wobei der Gegenhalter bewegbar an der ersten Baugruppe angeordnet ist. Dies ist insbesondere dann bevorzugt, wenn in dem montierten Zustand der Verbindungsanordnung sowohl ein Rastelementträger als auch ein Anschlagträger zu den Bauteilen der zweiten Baugruppe beabstandet sind. Für die bewegbare Anordnung des Gegenhalters an der ersten Baugruppe kann ein Lagerbereich mit einem Schraubgewinde und/oder mit einer Linearführung vorgesehen sein.

Auch zur Handhabung des Gegenhalters ist es bevorzugt, wenn dieser mindesten eine Handhabungsfläche (beispielsweise eine Grifffläche) und/oder mindestens eine Werkzeugangriffsfläche (insbesondere für einen Schraubenschlüssel oder Schraubendreher) aufweist.

Es ist möglich, dass der Anschlag in seiner Wirkstellung an einer zu dem Rastelement benachbarten Abstützfläche der ersten Baugruppe und/oder an einem Abschnitt des Rastelements (selbst) anliegt. Die Verwendung einer Abstützfläche hat den Vorteil, dass das Erreichen der Wirkstellung haptisch besonders gut wahrnehmbar ist, insbesondere wenn der Anschlag und die Abstützfläche aus festen Materialien hergestellt sind. Die Anlage des Anschlags an einem Abschnitt des Rastelements hat den Vorteil, dass besonders hohe Haltekräfte erzeugt werden können, welche insbesondere stufenlos einstellbar sind.

Bei einem bevorzugten Grundprinzip der Verbindungsanordnung ist vorgesehen, dass sich das Rastelement während der Montage der beiden Baugruppen ausgehend von einem unverformten Ruhezustand des Rastelements in die Montagelage verformt, dass das Rastelement - in der Demontagestellung des Anschlags - ausgehend von dem unverformten Ruhezustand in die Demontagelage verformbar ist, und dass die Montagelage und die Demontagelage, bezogen auf den unverformten Ruhezustand, mit einander entgegengesetzt gerichteten Verformungen des Rastelements einhergehen.

Vorteilhafte Ausgestaltungen sind in den Unteransprüchen und in der nachfolgenden Beschreibung bevorzugter Ausführungsformen angegeben.

In der Zeichnung zeigt:
- Fig. 1: eine perspektivische Ansicht einer Ausführungsform einer Verbindungsanordnung mit einem Behälter und mit einem Anschlussstutzen, in einem Ausgangszustand vor Montage der Verbindungsanordnung;
- Fig. 2: die Verbindungsanordnung gemäß Fig. 1 in einer perspektivischen Schnittdarstellung, in dem Ausgangszustand vor Montage der Verbindungsanordnung;
- Fig. 3: eine geschnittene Seitenansicht der Verbindungsanordnung gemäß Fig. 1, während einer ersten Montagephase;
- Fig. 4: eine geschnittene Seitenansicht der Verbindungsanordnung gemäß Fig. 1, während einer zweiten Montagephase;
- Fig. 5: eine geschnittene Seitenansicht der Verbindungsanordnung gemäß Fig. 1, in einem Montagezustand;
- Fig. 6: eine geschnittene Seitenansicht der Verbindungsanordnung gemäß Fig. 1, in einer ersten Demontagephase;
- Fig. 7: eine geschnittene Seitenansicht der Verbindungsanordnung gemäß Fig. 1, in einer zweiten Demontagephase;
- Fig. 8: eine geschnittene Seitenansicht der Verbindungsanordnung gemäß Fig. 1, in einer dritten Demontagephase;
- Fig. 9: eine geschnittene Seitenansicht der Verbindungsanordnung gemäß Fig. 1, in einem Demontagezustand;
- Fig. 9a: eine der Fig. 5 entsprechende Seitenansicht einer weiteren Ausführungsform einer Verbindungsanordnung;
- Fig. 9b: einen in Fig. 9a mit IXb bezeichneten Ausschnitt in vergrößerter Darstellung;
- Fig. 10: eine perspektivische, geschnittene Ansicht einer weiteren Ausführungsform einer Verbindungsanordnung, welche eine als Druckbolzen ausgebildete Betätigungseinrichtung aufweist, in einem Montagezustand;
- Fig. 11: eine geschnittene Seitenansicht der Verbindungsanordnung gemäß Fig. 10, während einer Montagephase;
- Fig. 12: eine geschnittene Seitenansicht der Verbindungsanordnung gemäß Fig. 10, während einer ersten Demontagephase;
- Fig. 13: eine geschnittene Seitenansicht der Verbindungsanordnung gemäß Fig. 10, während einer zweiten Demontagephase;
- Fig. 14: eine perspektivische, geschnittene Ansicht einer weiteren Ausführungsform einer Verbindungsanordnung, welche eine als Gewindebolzen ausgebildete Betätigungseinrichtung aufweist;
- Fig. 15: eine geschnittene Seitenansicht der Verbindungsanordnung gemäß Fig. 14, während einer ersten Demontagephase;
- Fig. 16: eine perspektivische, geschnittene Ansicht einer weiteren Ausführungsform einer Verbindungsanordnung, deren Anschlag in seiner Wirkstellung an einem Rastelement anliegt, wobei die Verbindungsanordnung in einem Vormontagezustand dargestellt ist.
- Fig. 17: eine geschnittene Seitenansicht der Verbindungsanordnung gemäß Fig. 16, in einem Fertigmontagezustand;
- Fig. 18: eine geschnittene Seitenansicht der Verbindungsanordnung gemäß Fig. 16, während einer Demontagephase.
- Fig. 19: eine perspektivische, geschnittene Ansicht einer weiteren Ausführungsform einer Verbindungsanordnung in Form einer Linearanordnung, deren Aufbau und Funktionsweise der Verbindungsanordnung gemäß Figuren 10 bis 13 entspricht;
- Fig. 20: eine perspektivische, geschnittene Ansicht einer weiteren Ausführungsform einer Verbindungsanordnung in Form einer Linearanordnung, deren Aufbau und Funktionsweise der Verbindungsanordnung gemäß Figuren 14 und 15 entspricht; und
- Fig. 21: eine perspektivische, geschnittene Ansicht einer weiteren Ausführungsform einer Verbindungsanordnung in Form einer Linearanordnung, deren Aufbau und Funktionsweise der Verbindungsanordnung gemäß Figuren 16 bis 18 entspricht.
- Fig. 22: eine geschnittene Seitenansicht einer weiteren Ausführungsform einer Verbindungsanordnung mit einer Kupplung und mit einem Anschlussstutzen, in einem Ausgangszustand vor Montage der Verbindungsanordnung;
- Fig. 23: die Verbindungsanordnung gemäß Fig. 22, während einer Montagephase;
- Fig. 24: die Verbindungsanordnung gemäß Fig. 22, in einem ersten Montagezustand;
- Fig. 25: die Verbindungsanordnung gemäß Fig. 22, in einem zweiten Montagezustand;
- Fig. 26: die Verbindungsanordnung gemäß Fig. 22, in einer ersten Demontagephase;
- Fig. 27: die Verbindungsanordnung gemäß Fig. 22, in einer zweiten Demontagephase;
- Fig. 28: eine geschnittene Seitenansicht einer weiteren Ausführungsform einer Verbindungsanordnung mit einem Behälter und mit einem Anschlussstutzen, in einem ersten Montagezustand;
- Fig. 29: die Verbindungsanordnung gemäß Fig. 28, in einem zweiten Montagezustand; und
- Fig. 30: eine geschnittene Seitenansicht einer weiteren Ausführungsform einer Verbindungsanordnung, mit zwei Anschlussstutzen und mit einer Doppelkupplung.

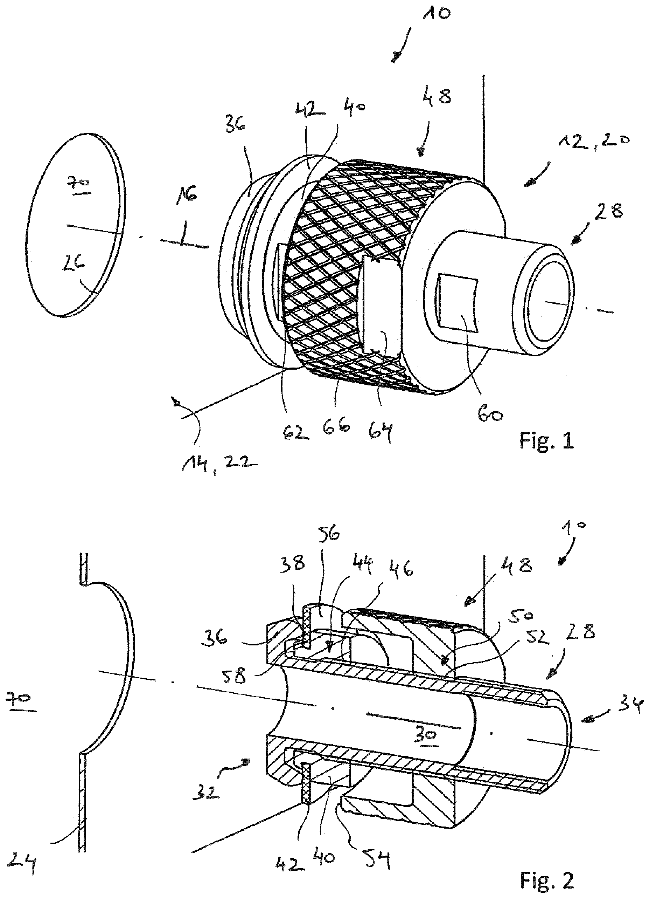

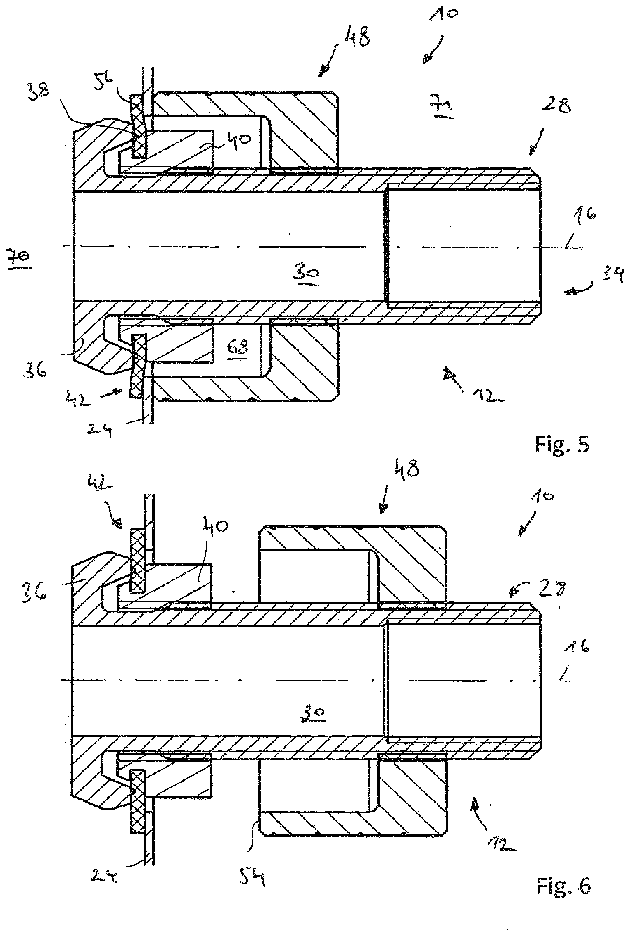

Eine Ausführungsform einer Verbindungsanordnung ist in der Zeichnung insgesamt mit dem Bezugszeichen 10 bezeichnet. Diese umfasst eine erste Baugruppe 12 und eine zweite Baugruppe 14. Die Baugruppen 12 und 14 sind entlang einer geradlinigen Montageachse 16 miteinander fügbar (vergleiche Figuren 1 bis 5) und voneinander demontierbar (vergleiche Figuren 6 bis 9).

Die erste Baugruppe 12 ist in Form eines Anschlussstutzens 20 ausgebildet. Die zweite Baugruppe 14 ist in Form eines Behälters 22 ausgebildet. Der Behälter 22 weist eine Behälterwand 24 auf, in der eine umfangsseitig geschlossene Öffnung 26 zur Aufnahme des Anschlussstutzens 20 ausgebildet ist, vergleiche Figuren 1 und 2.

Die erste Baugruppe 12 weist einen Rohrstutzen 28 auf, der eine Fluidleitung 30 begrenzt, welche sich entlang der Montageachse 16 der Verbindungsanordnung 10 erstreckt.

Der Rohrstutzen 28 und die Fluidleitung 30 erstrecken sich zwischen einem Einführende 32 zur Einführung des Anschlussstutzens 20 in die Öffnung 26 des Behälters 22 und einem distalen Ende 34, das beispielsweise zum Anschluss einer Rohrleitung oder eines Schlauchs dient.

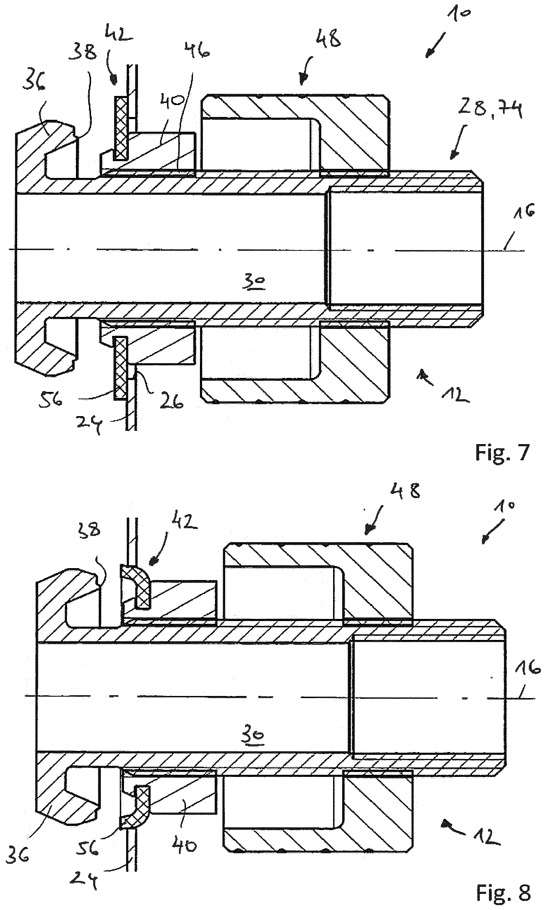

Der Rohrstutzen 28 weist einen ringförmigen Anschlagträger 36 auf, mit einem Anschlag 38, vergleiche auch Figuren 2 und 7, der durch eine Ringfläche gebildet ist, welche sich in einer zu der Montageachse 16 senkrechten Ebene erstreckt. Der Anschlag 38 weist in Richtung auf das distale Endes 34 des Rohrstutzens 28.

Benachbart zu dem Anschlagträger 36 ist ein ringförmiger Rastelementträger 40 angeordnet, an welchem ein ringförmiges, insbesondere ringscheibenförmiges, Rastelement 42 angeordnet ist. Das Rastelement 42 ist aus einem Elastomermaterial hergestellt.

Der Rastelementträger 40 ist über einen Lagerbereich 44 in Form eines Schraubgewindes 46 mit dem Rohrstutzen 28 verschraubt und bewegbar mit diesem verbunden.

Die erste Baugruppe 12 umfasst ferner einen Gegenhalter 48, der ebenfalls ringförmig ausgebildet ist und an einem zweiten Lagerbereich 50 in Form eines Schraubgewindes 52 an dem Rohrstutzen 28 verschraubbar gelagert ist. Der Gegenhalter weist eine dem Rastelement 42 zugewandte ringförmige Andrückfläche 54 auf.

Das Rastelement 42 weist einen von dem Rastelementträger 40 nach radial außen hervorstehenden Abschnitt 56 auf. Ein radial innen angeordneter Abschnitt 58 des Rastelements 42 ist an dem Rastelementträger 40 fixiert.

Zur Handhabung und Relativbewegung des Anschlagträgers 36, des Rastelements 42 und des Gegenhalters 48 weist die erste Baugruppe 12 mindestens eine Teilmenge der nachfolgend genannten Werkzeugangriffsflächen auf: Der Rohrstutzen 28 weist eine erste Werkzeugangriffsfläche 60 auf, die dem Anschlagträger 36 zugeordnet ist. Der Rastelementträger 40 weist eine zweite Werkzeugangriffsfläche 62 auf, die dem Rastelementträger 40 und dem Rastelement 42 zugeordnet ist. Der Gegenhalter 48 weist eine dritte Werkzeugangriffsfläche 64 auf, welche alternativ oder zusätzlich zu einer Griff- oder Handhabungsfläche 66 vorgesehen ist, die beispielsweise in Form einer Riffelfläche bereitgestellt ist.

In einem Ausgangszustand vor der Montage der Verbindungsanordnung 10 sind die Baugruppen 12 und 14 zueinander beabstandet angeordnet und entlang der Montageachse 16 relativ zueinander ausgerichtet, vergleiche Figuren 1 und 2. In diesem Ausgangszustand ist es bevorzugt, dass der Anschlag 38 eine Wirkstellung einnimmt, in welcher der Anschlag 38 an dem Rastelement 42, insbesondere an dem Abschnitt 58 des Rastelements 42, anliegt. Dieser Zustand kann dadurch herbeigeführt werden, dass der Anschlagträger 36 und der Rastelementträger 40 relativ zueinander verschraubt werden, bis der Anschlag 38 in Anlage mit dem Rastelement 42 gelangt, insbesondere mit dem Abschnitt 58 des Rastelements 42.

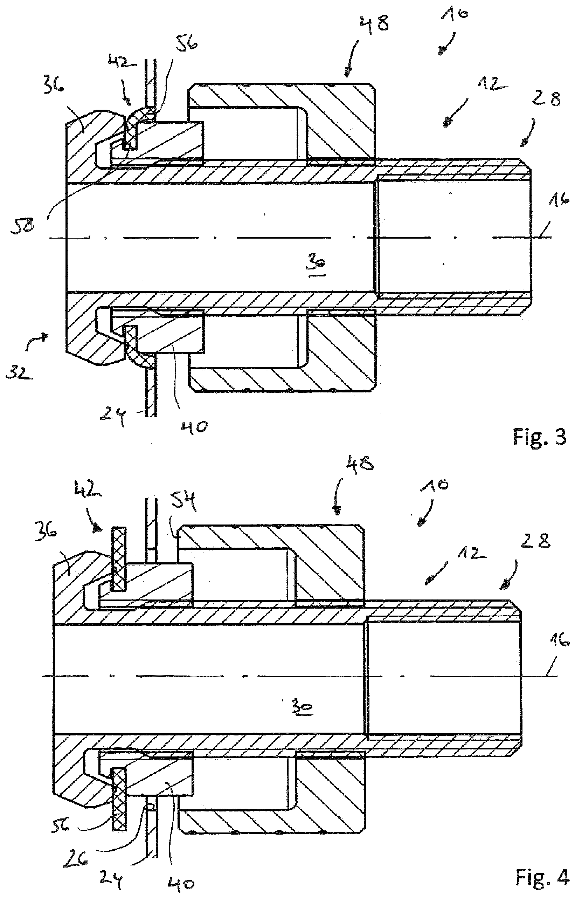

In einem bevorzugten Ausgangszustand ist der Gegenhalter 48 bzw. dessen Andrückfläche 54 zu dem Abschnitt 56 des Rastelements 42 so weit beabstandet, dass sich dieses im Zuge einer ersten Montagephase von dem Gegenhalter 48 ungehindert in eine Montagelage verformen kann, vergleiche Figur 3. Während einer ersten Montagephase wird das Einführende 32 des Rohrstutzens 28 in die Öffnung 26 der Behälterwand 24 eingeführt, wobei die Öffnung 26 so bemessen ist, dass sie - in einem unverformten Ausgangszustand des Rastelements 42 - kleiner ist als der Abschnitt 56 des Rastelements 42. Während des Einführens des Einführendes 32 in die Öffnung 26 gelangt der Abschnitt 56 des Rastelements 42 im Bereich der Berandung der Öffnung 26 in Anlage mit der Außenseite der Behälterwand 24 und wird in eine Montagelage verformt, vergleiche Figur 3, wobei auch der Rastelementträger 40 innerhalb der Öffnung 26 aufgenommen ist.

Durch weitere Einführung in die Öffnung 26 gelangt das Rastelement 42 wieder außer Eingriff mit der Öffnung 26 der Behälterwand 24 und verformt sich elastisch zurück, in einen weitestgehend unverformten Ruhezustand, vergleiche Figur 4. In dieser Montagephase sind das Rastelement 42 und die Andrückfläche 54 des Gegenhalters 48 auf voneinander abgewandten Seiten der Behälterwand 24 angeordnet, aber zunächst noch zu der Behälterwand 24 beabstandet.

Durch Betätigung des Gegenhalters 48, vergleiche Figur 5, werden das Rastelement 42 und die Andrückfläche 54 des Gegenhalters 48 in Anlage mit voneinander abgewandten Seiten der Behälterwand 24 gebracht. Zu diesem Zweck wird der Gegenhalter 48 mittels des Schraubgewindes 52 so relativ zu dem Rohrstutzen 28 verschraubt, dass der Gegenhalter 48 weiter in Richtung Rastelement 42 bewegt wird.

Somit ist der Montagezustand der Verbindungsanordnung 10 erreicht. Hierbei ist der Rastelementträger 40 auf Höhe der Öffnung 26 der Behälterwand 24 angeordnet und im Übrigen in einem hohlzylindrischen Raum 68 des Gegenhalters 48 aufgenommen. Das Rastelement 42 liegt dichtend an dem Anschlag 38 und an einer Innenseite der Behälterwand 24 an und bildet somit auch eine Abdichtung zwischen der ersten Baugruppe 12 und der zweiten Baugruppe 14, welche einen Austritt von Fluid aus einem Innenraum 70 des Behälters 22 in eine in Figur 5 mit dem Bezugszeichen 71 bezeichnete Umgebung der Verbindungsanordnung verhindert.

Zur Demontage der Verbindungsanordnung 10 wird zunächst der Gegenhalter 48 so relativ zu dem Rohrstutzen 28 verschraubt, dass die Andrückfläche 54 zu der Behälterwand 24 beabstandet ist, vergleiche Figur 6. In diesem Demontagezustand ist die erste Baugruppe 12 zwar schon relativ zu der Behälterwand 24 bewegbar; ein vollständiges Entfernen/Herausziehen der ersten Baugruppe 12 aus dem Behälter 22 ginge jedoch mit einer sehr starken Verformung und ggf. sogar einer Beschädigung des Rastelements 42 einher. Dies ist der Grund, warum in dem Montagezustand der Verbindungsanordnung (vgl. Figur 5) von dem Rastelement 42 sehr hohe Haltekräfte ausgeübt werden.

Um nun die Demontage der ersten Baugruppe 12 mit niedrigen Demontagekräften zu ermöglichen, werden in einem folgenden Montageschritt, vergleiche Figur 7, der Anschlag 38 und das Rastelement 42 bzw. der Anschlagträger 36 und der Rastelementträger 40 so relativ zueinander bewegt, dass der Anschlag 38, bezogen auf die zuvor beschriebene Wirkstellung eine weiter beabstandete Demontagestellung einnimmt, in welcher der Anschlag 38 so weit von dem Abschnitt 56 des Rastelements 42 entfernt angeordnet ist, dass sich das Rastelement 42 von dem Anschlag 38 ungehindert in eine Demontagelage verformen kann, die das Rastelement 42 unter Verformung seines Abschnitts 56 einnimmt, wenn das Rastelement 42 bei der Demontage der ersten Baugruppe 12 durch die Öffnung 26 Behälterwand 24 gezwängt wird, vergleiche Figur 8.

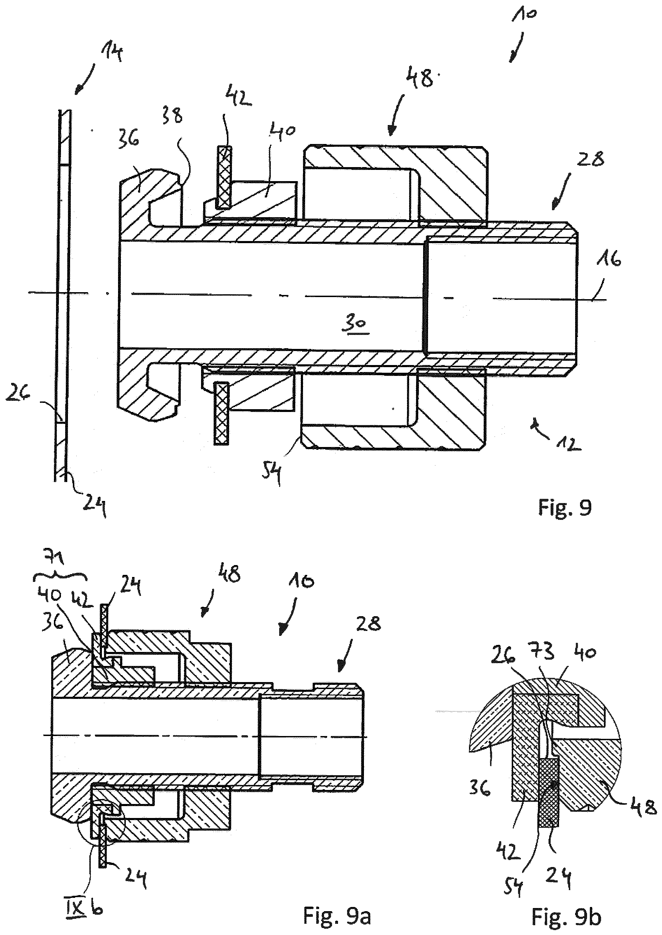

Nachdem das Rastelement 42 beim Zurückziehen der ersten Baugruppe 12 die Öffnung 26 vollständig überwunden hat, verformt es sich zurück in seinen unverformten Ausgangszustand, vergleiche Figur 9. Die erste Baugruppe 12 ist nun von der zweiten Baugruppe 14 getrennt.

Zur erneuten Montage der beiden Baugruppen 12 und 14 können der Rastelementträger 40 und der Anschlagträger 36 durch relative Verdrehung um die Montageachse 16 wieder zurück in eine Vormontagelage, vergleiche Figur 2, überführt werden.

Sämtliche vorstehend beschriebenen Montage- und Demontagevorgänge werden ausschließlich durch Handhabung von Bauteilen der ersten Baugruppe 12 in der Umgebung 71 (vergleiche Figur 5) der Verbindungsanordnung 10, also auf der Außenseite der zweiten Baugruppe 14 und ohne Zugriff zu dem Innenraum 70 der zweiten Baugruppe 14 durchgeführt.

Die Verbindungsanordnung 10 gemäß Figuren 1 bis 9 dient insbesondere dazu, Fluid zwischen dem distalen Ende 34 des Rohrstutzens 28 der ersten Baugruppe 12 über die Fluidleitung 30 in den Innenraum 70 des Behälters leiten zu können, vergleiche Figuren 1, 2 und 5.

Eine in den Figuren 9a und 9b darstellte Verbindungsanordnung 10 weist über die vorstehend beschriebene Verbindungsanordnung 10 hinausgehend zwei Besonderheiten auf, welche auch jeweils für sich genommen vorteilhaft sind:
Das Rastelement 42 und der Rastelementträger 40 sind miteinander stoffschlüssig verbunden und vorzugsweise als Zweikomponenten-Baugruppe 71 in einem 2K-Spritzgießverfahren hergestellt.

Der Gegenhalter 48 weist benachbart zu der Andrückfläche 54 einen ring- oder segmentförmigen Vorsprung 73 auf, der bei der Montage der Baugruppen 12 und 14 eine Zentrierfunktion durch Eingriff in die Öffnung 26 der Behälterwand 24 realisiert.

Ein Grundprinzip der Verbindungsanordnungen 10 gemäß Figuren 1 bis 9b besteht darin, dass das Rastelement 42 in dem demontierten Zustand der Baugruppen 12 und 14 einen unverformten Zustand einnimmt, dass das Rastelement 42 während der Montage (vergleiche Figur 3) in eine Montagelage verformt wird, dass das Rastelement 42 während der Demontage in eine Demontagelage verformt wird, vergleiche Figur 8. Bezogen auf die Ruhestellung gehen die Montagelage (vergleiche Figur 3) und die Demontagelage (vergleiche Figur 8) des Rastelements 42 mit - bezogen auf den unverformten Ruhezustand - einander entgegengesetzt gerichteten Verformungen des Rastelements 42 einher.

Ein weiteres Grundprinzip der Verbindungsanordnungen 10 besteht darin, dass das Rastelement 42 nach Abschluss der Montage der Verbindunganordnungen 10, also in dem Montagezustand der Verbindungsanordnungen 10, einen Hinterschnitt bildet, der einer Demontage der beiden Baugruppen 12, 14 entgegenwirkt, vergleiche Figuren 4, 5 und 9a (in diesem Fall ist die zu der Öffnung 26 benachbarte Behälterwand 24 auf Höhe des Abschnitts 56 des Rastelements 42 in dem genannten Hinterschnitt angeordnet).

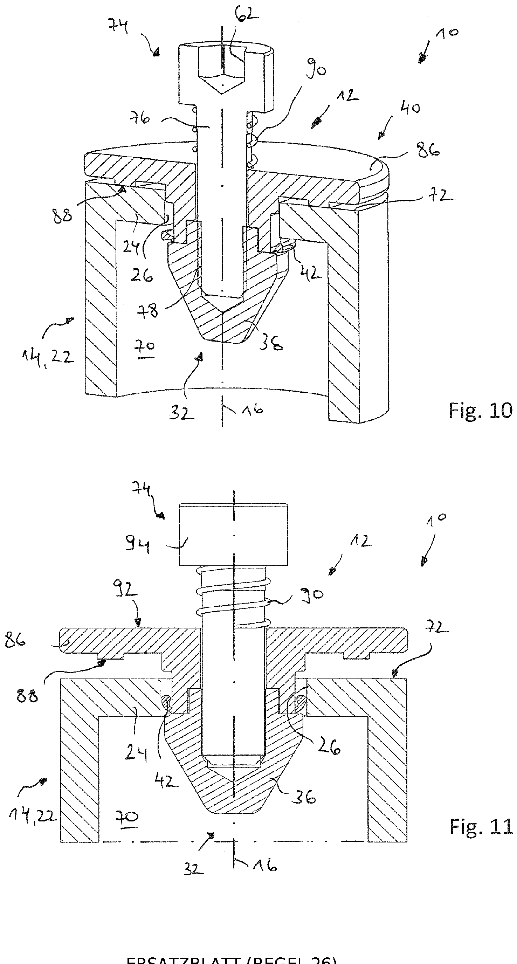

Die vorstehend erläuterten Grundprinzipien sind auch bei den nachfolgend beschriebenen Ausführungsbeispielen realisiert. Für die nachfolgende Beschreibung zu den Ausführungsbeispielen gemäß Figuren 11 bis 30 wird auch Bezug genommen auf die vorstehende Beschreibung zu den Ausführungsbeispielen gemäß Figuren 1 bis 9b. Zur Vermeidung von Wiederholungen werden dabei vornehmlich die Besonderheiten der jeweiligen Ausführungsbeispiele erläutert, welche noch nicht vorstehend unter Bezugnahme auf die Ausführungsbeispiele gemäß Figuren 1 bis 9b beschrieben wurden. Identische oder funktionsäquivalente Bauteile tragen zu vorstehend beschriebenen Bauteilen identische Bezugszeichen.

Die Verbindungsanordnung 10 gemäß Figuren 10 bis 13 umfasst eine zweite Baugruppe 14, die beispielsweise in Form eines Behälters 22 ausgebildet ist und eine Behälterwand 24 aufweist, die einen Innenraum 70 begrenzt. In der Behälterwand 24 ist eine Öffnung 26 angeordnet, welche dazu dient, das Einführende 32 einer ersten Baugruppe 12 längs einer Montageachse 16 montieren und demontieren zu können.

Die zweite Baugruppe 14 weist an ihrer Außenseite eine sich vorzugsweise senkrecht zu der Montageachse 16 erstreckende Anlagefläche 72 auf.

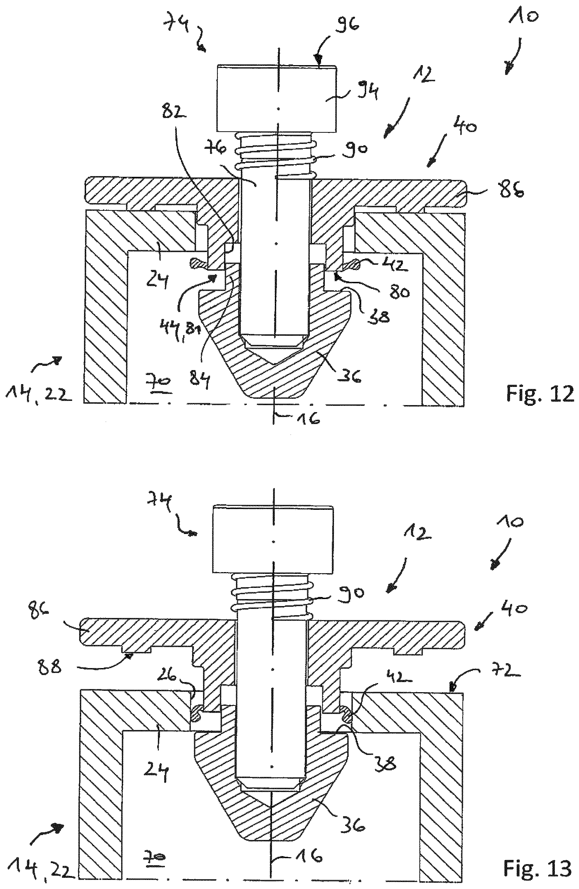

Die erste Baugruppe 12 umfasst eine insgesamt mit dem Bezugszeichen 74 bezeichnete Betätigungseinrichtung mit einem Druckbolzen 76, der endseitig, beispielsweise über ein Schraubgewinde 78, mit einem Anschlagträger 36 verbunden ist. Der Anschlagträger 36 weist einen sich in einer ringförmigen Ebene erstreckenden Anschlag 38 auf, vergleiche Figur 12.

Die erste Baugruppe 12 umfasst ferner einen Rastelementträger 40, der an einem dem Anschlagträger 36 zugewandten Ende eine Abstützfläche 80 aufweist, vergleiche Figur 12, die in der Wirkstellung des Anschlags 38 an dem Anschlag 38 anliegt, vergleiche Figur 10.

Der Anschlagträger 36 und der Rastelementträger 40 sind in einem Lagerbereich 44, der eine Linearführung 81 aufweist, in einer zu der Montageachse 16 parallelen Richtung relativ zueinander bewegbar. Die Linearführung 81 kann eine Aufnahme 82 zur Führung eines in der Aufnahme 82 geführten, insbesondere zylindrischen, Abschnitts 84 aufweisen, vergleiche Figur 12.

Der Rastelementträger 40 weist an seinem dem Anschlagträger 36 abgewandten Ende einen Kragen 86 auf, der einen der zweiten Baugruppe 14 zugewandten Anlageabschnitt 88 aufweist, vergleiche Figur 11, der in Anlage mit der Anlagefläche 72 der zweiten Baugruppe 14 gebracht werden kann, vergleiche Figuren 13 und 12.

Die erste Baugruppe 12 umfasst ferner eine Feder 90 in Form einer Druckfeder, welche sich einenends an einer Stirnfläche 92 des Kragens 86 abstützt und anderenends an einem Kopf 94 des Druckbolzens 76. In dem Montagezustand der Verbindungsanordnung 10, vergleiche Figur 10, liegt der Kragen 86 des Rastelementträgers 40 mit dem Anlageabschnitt 88 an der Anlagefläche 72 des zweiten Bauteils 14 an. Die Feder 90 stützt sich mit einem Ende an der Stirnfläche 92 des Kragens 86 ab und drückt den Kopf 94 und somit den Druckbolzen 76, bezogen auf den Innenraum 70, längs der Montageachse 16 nach außen. Auf diese Weise wird der Anschlagträger 36 mit seinem Anschlag 38 in seine Wirkstellung gedrängt, in welcher der Anschlag 38 an der Abstützfläche 80 des Rastelementträgers 40 anliegt. Das Rastelement 42 bildet einen Hinterschnitt für einen zu der Öffnung 26 benachbarten Teil der Behälterwand 24. Zur Montage der Verbindunganordnung 10 gemäß Figur 10 wird die erste Baugruppe 12 aus einem (nicht dargestellten) Ausgangszustand, in welchem die erste Baugruppe 12 zu der zweiten Baugruppe 14 beabstandet ist, entlang der Montageachse 16 und mit dem Einführende 32 des Anschlagträgers 36 voraus in die Öffnung 26 des zweiten Bauteils 14 eingeführt. Dabei wird das Rastelement 42 im Bereich der Öffnung 26 in seine Montagelage verformt, vergleiche Figur 11. Nach Überwindung der Begrenzung der Öffnung 26 verformt sich das Rastelement 42 wieder elastisch zurück, vergleiche Figur 10. In diesem Zustand verhindert die zu dem Rastelement 42 benachbarte Anordnung des Anschlags 38 eine Demontage der Verbindungsanordnung 10, also das Herausziehen der ersten Baugruppe 12 aus der zweiten Baugruppe 14 entlang der Montageachse 16.

Zur Demontage der Verbindungsanordnung 10 genügt es (beispielsweise von Hand) Druck auf eine Handhabungsfläche 96 auszuüben. Die Handhabungsfläche 96 ist vorzugsweise eine Stirnfläche des Druckbolzens 76, insbesondere des Kopfs 94 des Druckbolzens 76. Zur Ausübung des genannten Drucks kann auch ein Werkzeug verwendet werden, das in eine Werkzeugangriffsfläche 62 (beispielsweise eine Innensechskantfläche) eingesetzt wird. In jedem Fall dient der auf die Betätigungseinrichtung 74 ausgeübte Druck dazu, den Druckbolzen 76 weiter in Richtung Innenraum 70 der zweiten Baugruppe 14 zu verlagern, vergleiche Figuren 10 und 12, sodass der Anschlag 38 unter Komprimierung der Feder 90 weiter zu der Abstützfläche 80 des Rastelementträgers 40 beabstandet ist. Dieser Abstand, vergleiche Figur 12, dient dazu, einen Freiraum zu schaffen, der es dem Rastelement 42 ermöglicht, von dem Anschlag 38 ungehindert in eine Demontagelage verformt zu werden, vergleiche Figur 13.

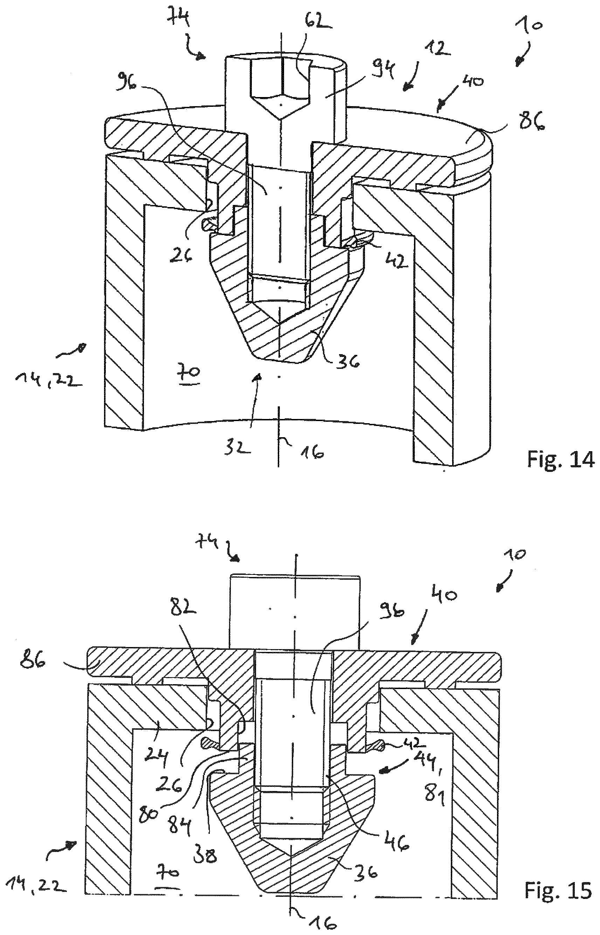

Alternativ zu dem unter Bezugnahme auf Figuren 10 bis 13 beschriebenen Druckbolzen 76 kann die Betätigungseinrichtung 74 auch einen Gewindebolzen 96 aufweisen, vergleiche die Ausführungsform einer Verbindungsanordnung 10 gemäß Figuren 14 und 15. Der Gewindebolzen 96 und der Anschlagträger 36 dieser Verbindungsanordnung 10 sind mittels eines Schraubgewindes 46 miteinander verschraubt.

Zusätzlich sind der Anschlagträger 36 und der Rastelementträger 40 mittels einer Linearführung 81 relativ zueinander geführt, und zwar in einer Richtung parallel zu der Montageachse 16. Vorzugsweise sind ein Abschnitt 84 des Anschlagträgers 36 und eine Aufnahme 82 des Rastelementträgers 40 lediglich entlang der Montageachse 16 relativ zueinander verschiebbar, jedoch in Drehrichtung um die Montageachse 16 herum gesehen miteinander formschlüssig verbunden, beispielsweise indem der Abschnitt 84 eine von einer Zylinderform abweichende Außenseite, beispielsweise eine Verzahnung trägt, die komplementär zu einer nach radial innen weisenden Verzahnung der Aufnahme 82 ausgebildet ist.

Zur Montage der Verbindungsanordnung 10 kann die erste Baugruppe 12 so vorbereitet werden, dass der Anschlag 38 des Anschlagträgers 36 bereits in Anlage mit einer Abstützfläche 80 des Rastelementträgers 40 steht, bevor ein Einführende 32 in die Öffnung 26 der zweiten Baugruppe 14 eingeführt wird.

Zur Demontage der beiden Baugruppen 12 und 14 wird der Gewindebolzen 96 betätigt, indem der Gewindebolzen 96 verdreht wird, beispielsweise unter Verwendung einer Werkzeugangriffsfläche 62 des Kopfs 94. Durch den in Drehrichtung wirksamen Formschluss zwischen den Abschnitten 82 und 84 wird eine Verdrehung des Anschlagträgers 36 verhindert, sodass der Gewindebolzen 96 aus dem Anschlagträger 36 herausgeschraubt wird, wodurch der Anschlag 38 in eine zu der Abstützfläche 80 weiter beabstandete Demontagestellung verbracht wird. Auf diese Weise ist das Rastelement 42 in vorstehend beschriebener Art und Weise in eine Demontagelage verformbar, welche die Demontage der ersten Baugruppe 12 von der zweiten Baugruppe 14 mit niedrigen Demontagekräften ermöglicht.

Ein zu dem Gewindebolzen 96 funktionsäquivalentes Bauteil einer Betätigungseinrichtung 74 ist bei dem Ausführungsbeispiel gemäß Figuren 1 bis 9 durch den Rohrstutzen 28 mit dem Gewinde 46 gebildet, vergleiche Figur 7.

Im Übrigen entspricht der Aufbau und die Funktionsweise der Verbindungsanordnung 10 gemäß Figuren 14 und 15 dem Aufbau und der Funktionsweise der Verbindungsanordnung 10 gemäß Figuren 10 bis 13.

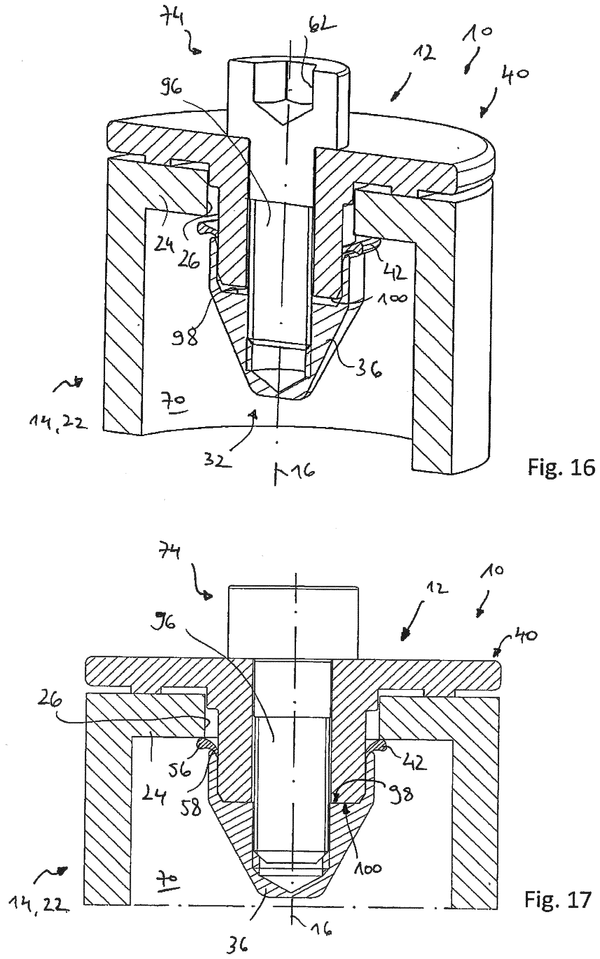

Die nachfolgend unter Bezugnahme auf Figuren 16 bis 18 beschriebene Verbindungsanordnung 10 wiederum entspricht mit Ausnahme der nachfolgend beschriebenen Besonderheiten der Verbindungsanordnung 10 gemäß Figuren 14 und 15. Die Verbindungsanordnung 10 gemäß Figuren 16 bis 18 unterscheidet sich von der Verbindungsanordnung 10 gemäß Figuren 14 und 15 durch die Ausgestaltung des Lagerbereichs 44 zwischen dem Anschlagträger 36 und dem Rastelementträger 40 und durch die Art des Zusammenwirkens des Anschlags 38 mit dem Rastelement 42.

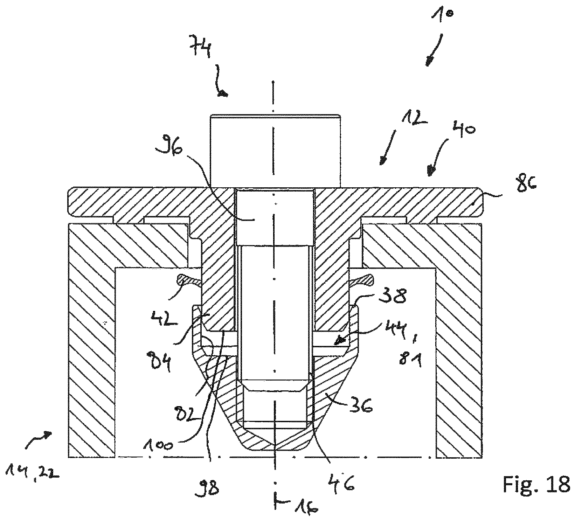

Der Lagerbereich 44 umfasst eine Linearführung 81 mit einer Aufnahme 82, die an dem Anschlagträger 36 angeordnet ist und die einen Abschnitt 84 des Rastelementträgers 40 längs der Montageachse 16 verschiebbar aufnimmt, jedoch mit diesem in Drehrichtung um die Montageachse 16 formschlüssig ist, vergleiche Figur 18. Der Anschlag 38 wirkt nicht mit einer Abstützfläche 80 des Rastelementträgers 40 zusammen, sondern unmittelbar mit einem radial innenliegenden ringförmigen Abschnitt 58 des Rastelements 42, vergleiche Figur 17.

Ein radial außenliegender Ringabschnitt 56 des Rastelements 42 bildet einen Hinterschnitt, der eine Demontage der ersten Baugruppe 12 von der zweiten Baugruppe 14 verhindert, vergleiche Figur 17.

In der Wirkstellung des Rastelements 42 ist es möglich, das einander zugewandte Referenzflächen 98 des Anschlagträgers 36 und 100 des Rastelementträgers 40, vergleiche Figur 18, aneinander anliegen, vergleiche Figur 17.

Zur Montage der Verbindungsanordnung 10 gemäß Figuren 16 bis 18 wird das Einführende 32 der ersten Baugruppe 12 in die Öffnung 26 der zweiten Baugruppe 14 eingeführt, wobei es bevorzugt ist, dass die Referenzflächen 98 und 100 zunächst noch zueinander beabstandet sind, vergleiche Figur 16. Dies ermöglicht eine von dem Anschlag 38 ungehinderte Rückverformung des Rastelements 42 ausgehend aus einer Montagelage (vergleiche sinngemäß beispielsweise Figur 11) in einen zumindest weitestgehend unverformten Zustand, vergleiche Figur 16.

Durch Verdrehung des Gewindebolzens 96 wird der Anschlagträger 36 längs der Montageachse 16 relativ zu dem Rastelementträger 40 bewegt, bis der Anschlag 38 in Anlage mit dem Abschnitt 58 des Rastelements 42 gelangt. Hierdurch wird auch der Abschnitt 56 des Rastelements 42 bewegt und in Anlage mit einer dem Innenraum 70 zugewandten Seite der Behälterwand 24 gebracht. Der Montagevorgang ist abgeschlossen, wenn die Referenzfläche 98 und 100 aneinander anliegen.

Ausgehend von dem in Figur 17 dargestellten Montagezustand erfolgt eine Demontage der beiden Baugruppen 12 und 14, indem der Gewindebolzen 96 so verdreht wird, dass der Anschlagträger 36 mit seinem Anschlag 38 von dem Rastelement 42 wegbewegt wird, sodass ein Freiraum entsteht, der bei der Demontage der ersten Baugruppe 12 von der zweiten Baugruppe 14 nutzbar ist, vergleiche sinngemäß Figur 13.

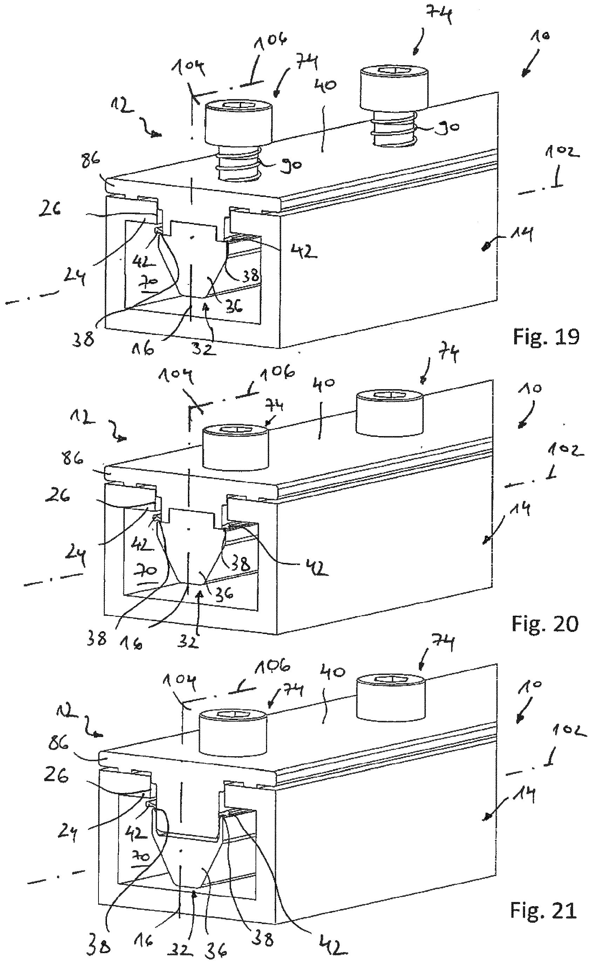

Die in den Figuren 19 bis 21 dargestellten Verbindungsanordnungen 10 weisen erste Baugruppen 12 und zweite Baugruppen 14 auf, welche in einem miteinander montierten Zustand jeweils eine Linearanordnung bilden, welche sich jeweils längs einer Erstreckungsachse 102 erstreckt. Die Montageachse 16 verläuft hierzu senkrecht, wobei die Montageachse 16 Teil einer Montageebene 104 ist, die von der Montageachse 16 und einem dazu senkrechten Vektor 106 aufgespannt wird, der parallel zu der Erstreckungsachse 102 verläuft.

Vorzugsweise erstreckt sich zumindest eine Teilmenge der nachfolgend genannten Bauteile der ersten Baugruppe 12 und der zweiten Baugruppe 14 jeweils entlang der Erstreckungsachse 102: Anschlagträger 36, Anschlag 38, Rastelementträger 40, Rastelement 42, Behälterwand 24, Öffnung 26.

Die mindestens eine Betätigungseinrichtung 74 ist vorzugsweise längs der Erstreckungsachse 102 gesehen lokal begrenzt.

Die Verbindungsanordnungen 10 gemäß Figuren 19 bis 21 weisen vorzugsweise zwei voneinander separat bereitgestellte, sich jeweils entlang einer Geraden erstreckende Rastelemente 42 auf, die auf voneinander abgewandten Seiten der Montageebene 104 angeordnet sind. Diese Rastelemente 42 wirken mit jeweils einem, sich ebenfalls parallel zu der Erstreckungsachse 102 erstreckenden Anschlag 38 zusammen.

Im Übrigen entspricht der Aufbau und die Funktionsweise der Verbindungsanordnungen 10 gemäß Figuren 19 bis 21 dem Aufbau und der Funktionsweise der Verbindungsanordnung gemäß Figuren 10 bis 13 (zu Figur 19), gemäß Figuren 14 und 15 (zu Figur 20) und gemäß Figuren 16 bis 18 (zu Figur 21).

Eine Gemeinsamkeit der vorstehend unter Bezugnahme auf Figuren 1 bis 21 beschriebenen Verbindungsanordnungen 10 besteht darin, dass deren jeweilige erste Baugruppe 12 ein Einführende 32 zur Einführung in eine Öffnung 26 der zweiten Baugruppe 14 aufweist. Insbesondere sind die wesentlichen Funktionen der Verbindungsanordnung 10 in der ersten Baugruppe 12 realisiert; für die zweite Baugruppe 14 genügt die Bereitstellung einer Öffnung 26 (welche beispielsweise umfangsseitig geschlossen ist, vergleiche Figuren 1 bis 18, oder beispielsweise nut- oder schlitzförmig ist, vergleiche Figuren 19 bis 21).

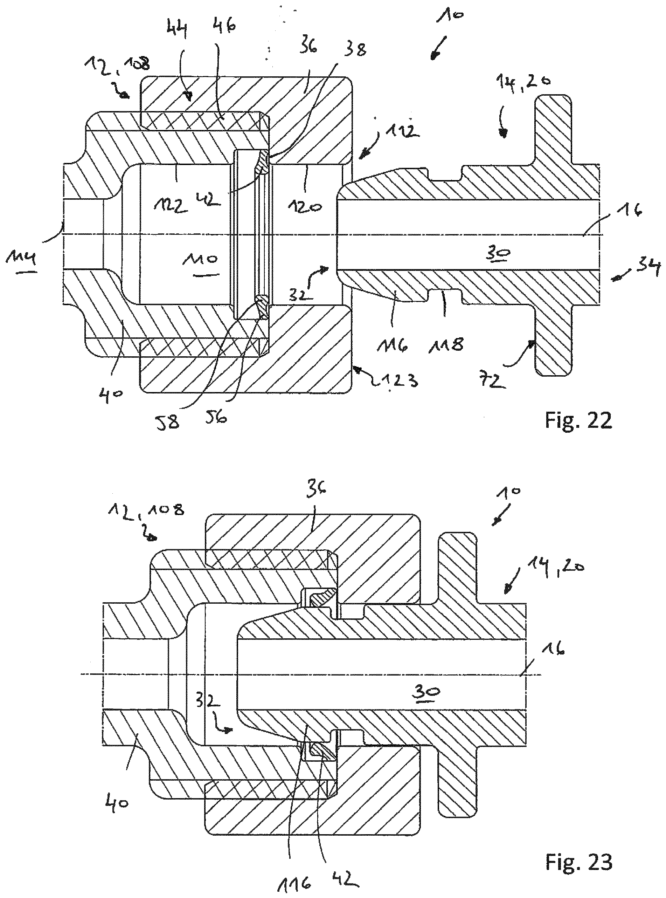

Bei den nachfolgend unter Bezugnahme auf Figuren 22 bis 30 beschriebenen Ausführungsbeispielen ist hingegen die zweite Baugruppe 14 in Form eines Anschlussstutzens 20 ausgebildet, welche mit einem Einführende 32 in einen Innenraum 110 einer ersten Baugruppe 12 einführbar ist.

Die erste Baugruppe 12 ist vorzugsweise in Form einer Kupplung 108 bereitgestellt, vergleiche Figur 22.

Die zweite Baugruppe 14 erstreckt sich zwischen dem Einführende 32 und einem distalen Ende 34 und weist vorzugsweise eine Fluidleitung 30 auf, die sich parallel zu der Montageachse 16 erstreckt.

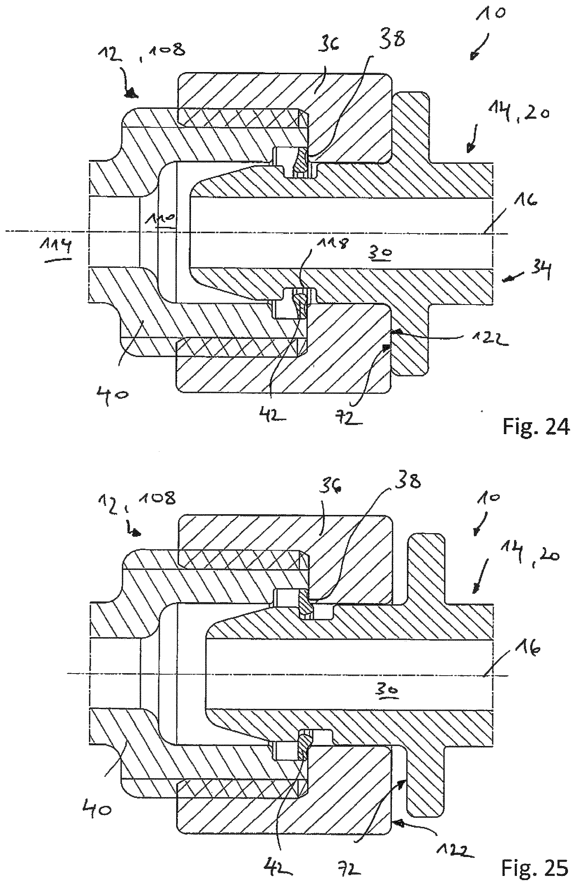

Der Innenraum 110 der ersten Baugruppe 12 erstreckt sich längs der Montageachse 16 gesehen bis hin zu einer Öffnung 112. Es ist möglich, dass der Innenraum 110 im Bereich eines der Öffnung 112 abgewandten Abschnitts oder Endes 114 der ersten Baugruppe 12 ebenfalls offen ist. Im montierten Zustand der Verbindungsanordnung 10, vergleiche Figur 24, ist eine Fluidleitung von dem distalen Ende 34 des Anschlussstutzens 20 der zweiten Baugruppe 14 durch die Fluidleitung 30 hindurch in den Innenraum 110 und zu dem Ende 114 der ersten Baugruppe ermöglicht, wobei sich an dieses Ende 114 der ersten Baugruppe 12 und an das distale Ende der zweiten Baugruppe 14 nicht dargestellte Rohre, Schläuche oder Behälter anschließen können.

Der Anschlussstutzen 20 der zweiten Baugruppe 14 weist einen von dem Einführende 32 ausgehend sich konisch erweiternden Einführkopf 116 auf. An diesen schließt sich eine nach radial innen einspringende Rastelementaufnahme 118 an. Zwischen der Rastelementaufnahme 118 und dem distalen Ende 34 ist längs der Montageachse 16 gesehen eine Anlagefläche 72 angeordnet, welche sich quer, insbesondere senkrecht, zu der Montageachse 16 erstreckt und der ersten Baugruppe 12 zugewandt ist.

Die erste Baugruppe 12 umfasst einen ringförmigen Anschlagträger 36 mit einer zentralen, vorzugsweise hohlzylindrischen Durchführung 120, welche an ihrem der Öffnung 112 abgewandten Ende von einem ringförmigen, sich senkrecht zu der Montageachse 16 erstreckenden Anschlag 38 begrenzt ist.

Der Anschlagträger 36 ist mit einem Rastelementträger 40 verschraubt, und zwar in einem Lagerbereich 44, der ein Schraubgewinde 46 aufweist.

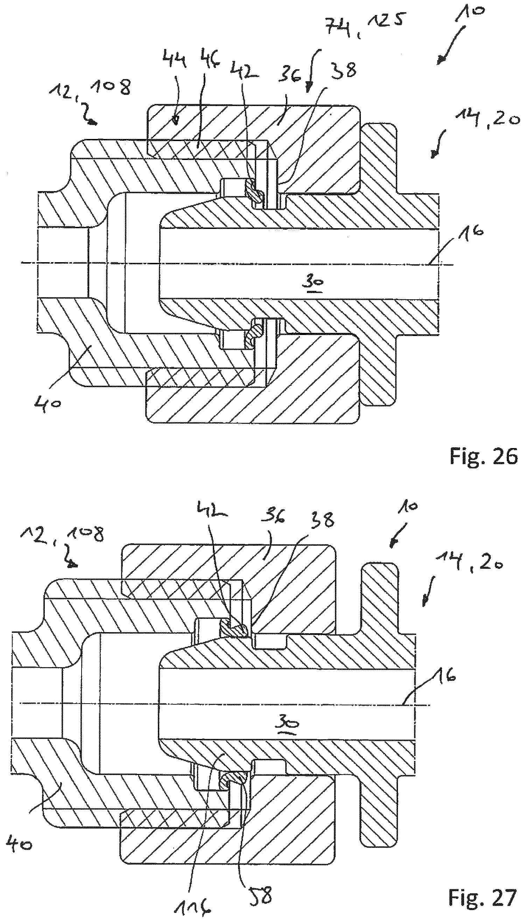

Der Rastelementträger 40 weist eine nach radial innen weisende, beispielsweise hohlzylindrische Wandung 122 auf. In einem zu dem Anschlag 38 benachbarten Abschnitt der Wandung 122 ist ein ringförmiges Rastelement 42 an dem Rastelementträger 40 befestigt. Hierbei ist ein mit dem Rastelementträger 40 verbundener, radial äußerer Ringabschnitt 56 und ein radial innerer Ringabschnitt 58 vorgesehen. Die beiden Abschnitte 56 und 58 sind einstückig miteinander verbunden und bilden gemeinsam eine ringförmige Rastlippe, welche sich ausgehend aus einem unverformten Ruhezustand (vergleiche Figur 22) in eine Montagelage (vergleiche Figur 23) und in eine Demontagelage (vergleiche Figuren 26 und 27) verformen kann.

Zur Montage der Verbindungsanordnung 10 gemäß Figuren 22 bis 27 wird der Einführkopf 116 mit dem Einführende 32 voran in die Öffnung 112 des Anschlagträgers 36 eingeführt, bis der Einführkopf 116 in Anlage mit dem Abschnitt 58 des Rastelements 42 gelangt und das Rastelement 42 in die Montagelage verformt, vergleiche Figur 23.

Eine weitere Bewegung der ersten Baugruppe 14 und der zweiten Baugruppe 12 in Richtung aufeinander zu bewirkt, dass das Rastelement 42 auf Höhe der Rastelementaufnahme 118 angeordnet ist, vergleiche Figur 24. Hierdurch kann das Rastelement 42 wieder seinen unverformten Ruhezustand einnehmen. In diesem Montagezustand der Verbindungsanordnung 10 liegt die Anlagefläche 72 der zweiten Baugruppe 14 an einem Anlageabschnitt 123 des Anschlagträgers 36 an, vergleiche Figur 24.

Das Rastelement 42 bildet einen Hinterschnitt, der einer Demontage der zweiten Baugruppe 14 (Herausziehen der zweiten Baugruppe 14 aus der ersten Baugruppe 12 längs der Montageachse 16) entgegenwirkt, vergleiche Figur 25.

In dem Montagezustand der Verbindungsanordnung 10 befindet sich der Anschlag 38 in seiner Wirkstellung, in welcher das Rastelement 42 an den Anschlag 38 heran verformbar ist, vergleiche Figur 25. Dies kann mit einem geringfügigen Abheben der Anlagefläche 72 des zweiten Bauteils 14 von dem Anlageabschnitt 123 des Anschlagträgers 36 einhergehen, vergleiche Figur 25. In dem in Figur 25 dargestellten Montagezustand können maximale Haltekräfte ausgeübt werden, welche eine Demontage der beiden Baugruppen 12 und 14 verhindern.

Für eine Demontage der beiden Baugruppen 12 und 14 mit niedrigen Demontagekräften werden der Anschlag 38 und das Rastelement 42 relativ zueinander und längs der Montagachse 16 gesehen weiter zueinander beabstandet, vergleiche Figur 26. Zu diesem Zweck werden der Rastelementträger 40 und der Anschlagträger 36 mittels des Schraubgewindes 46 relativ zueinander verdreht, sodass der Steigung des Schraubgewindes 46 entsprechend der Abstand zwischen dem Rastelement 42 und dem Anschlag 38 vergrößert wird. Hierbei bildet der Anschlagträger 36 eine Gewindehülse 125 als Teil einer Betätigungseinrichtung 74. Die Abstandsvergrößerung ermöglicht es, dass sich das Rastelement 42 im Zuge der Demontage der beiden Baugruppen von dem Anschlag 38 ungehindert in eine Demontagelage verformen kann, wobei der Abschnitt 58 des Rastelements 42 an dem Einführkopf 116 des Anschlussstutzens 20 anliegt, vergleiche Figur 27.

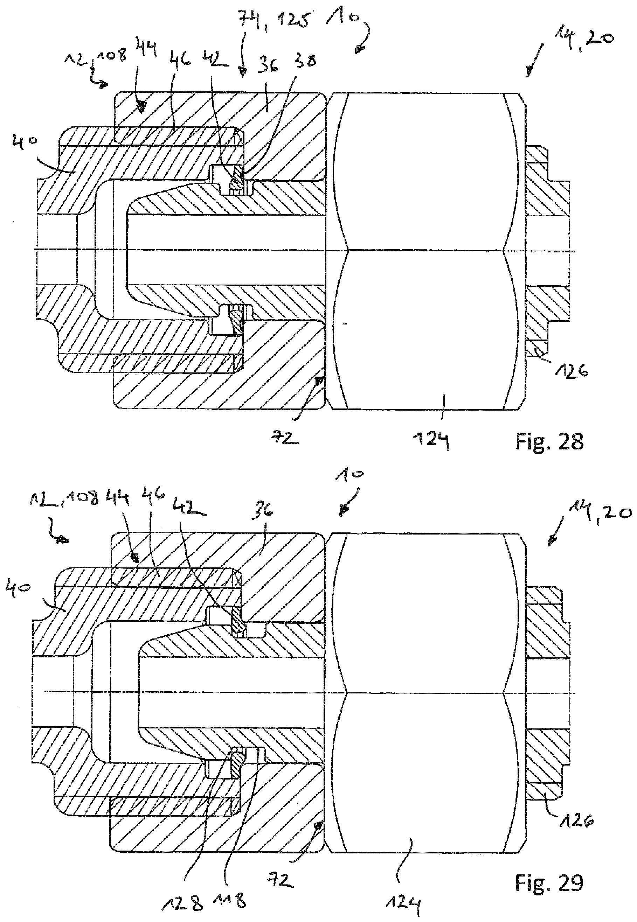

Eine in den Figuren 28 und 29 dargestellte weitere Verbindungsanordnung 10 weist einen zu der vorstehend unter Bezugnahme auf Figuren 22 bis 27 beschriebenen Verbindungsanordnung 10 weitestgehend identischen Aufbau auf. Die Besonderheit der Verbindungsanordnung 10 gemäß Figuren 28 und 29 besteht darin, dass die Anlagefläche 72 der zweiten Baugruppe 14 an der zweiten Baugruppe 14 bewegbar angeordnet ist.

Beispielsweise ist die Anlagefläche 72 an einer Schraubenmutter 124 ausgebildet, welche mittels eines Gewindes 126 mit dem Anschlussstutzen 20 verschraubt ist. Durch Veränderung der Lage der Anlagefläche 72 relativ zu dem Anschlussstutzen 20 ist es möglich, die zweite Baugruppe 14 relativ zu der ersten Baugruppe 12 so zu fixieren, dass das Rastelement 42 in dem Montagezustand der Verbindungsanordnung 10 spielfrei in der Rastelementaufnahme 118 aufgenommen ist und an einer Begrenzung 128 der Rastelementaufnahme 118 anliegt, vergleiche Figur 29.

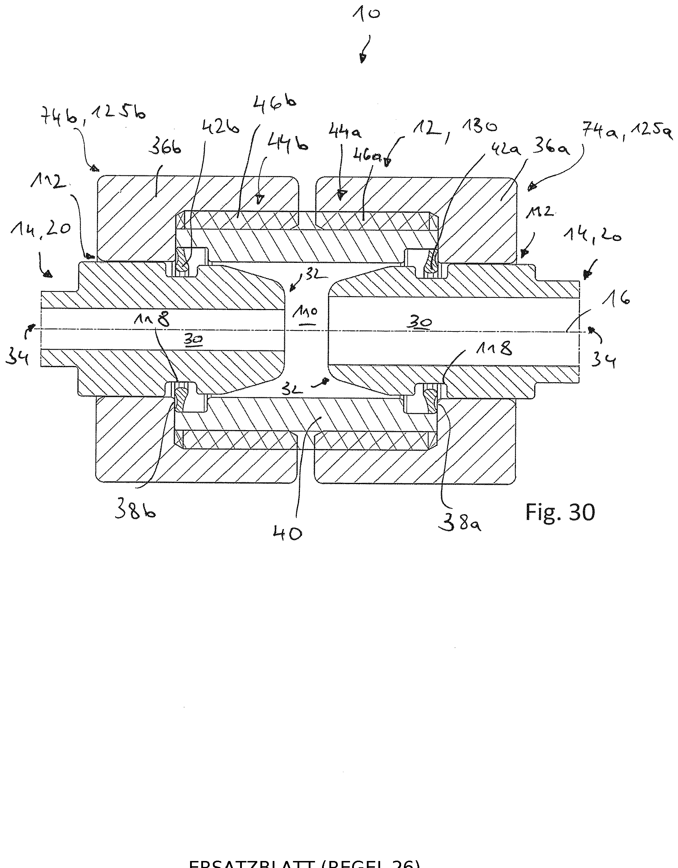

Eine in Figur 30 dargestellte Verbindungsanordnung 10 weist die Besonderheit auf, dass die erste Baugruppe 12 als Doppelkupplung 130 ausgebildet ist und zur Verbindung von zwei zweiten Baugruppen 14 dient, die jeweils als Anschlussstutzen 20 ausgebildet sind. Der Aufbau dieser Anschlussstutzen 20 entspricht den vorstehend unter Bezugnahme auf Figuren 21 bis 29 beschriebenen Anschlussstutzen 20, wobei auch die Anschlussstutzen 20 der Verbindungsanordnung 10 gemäß Figur 30 jeweils eine einstückig angeformte oder bewegbare Anlagefläche 72 aufweisen können.

Die beiden Anschlussstutzen 20 sind längs der Montageachse 16 in einander zugewandten Richtungen längs der Montageachse 16 in den Innenraum 110 der ersten Baugruppe 12 einführbar. Die erste Baugruppe 12 weist einen rohrförmigen Rastelementträger 40 auf, mit an einander abgewandten Enden angeordneten Rastelementen 42, die in Figur 30 mit 42a und 42b bezeichnet sind. Diese Rastelemente 42a und 42b sind jeweils einer Rastelementaufnahme 118 eines der beiden Anschlussstutzen 20 zugeordnet.

Die erste Baugruppe 12 umfasst ferner zwei Anschlagträger 36a und 36b mit jeweiligen Anschlägen 38a und 38b. Die Anschlagträger 36a, 36b sind mittels jeweiliger Lagerbereiche 44a, 44b, welche ein Schraubgewinde 46a, 46b aufweisen, relativ zu dem Rastelementträger 40 bewegbar und zwar entlang der Montageachse 16. Hierbei bilden die Anschlagträger 36a, 36b jeweils eine Gewindehülse 125a, 125b als jeweiliger Teil einer Betätigungseinrichtung 74a, 74b.

Die Verbindungsanordnung 10 gemäß Figur 30 dient insbesondere zur Fluidleitung zwischen einem distalen Ende 34 eines ersten Anschlussstutzens 20 über den Innenraum 110 der ersten Baugruppe 12 in die Fluidleitung 30 des zweiten Anschlussstutzens 20 zu dessen distalem Ende 34. Es versteht sich, dass sich an die jeweiligen distalen Enden 34 Rohre, Schläuche oder Behälter anschließen können.

Im Übrigen wird für den Aufbau und die Funktionsweise der Verbindungsanordnung 10 auf die vorstehende Beschreibung zu den Figuren 21 bis 29 Bezug genommen.

## Patentansprüche

1. Verbindungsanordnung (10), mit einer ersten Baugruppe (12) und mit einer zweiten Baugruppe (14), wobei an der ersten Baugruppe (12) ein elastisch verformbares Rastelement (42) angeordnet ist, das zur lösbaren Verrastung der ersten Baugruppe (12) und der zweiten Baugruppe (14) dient und das sich während einer Montage der beiden Baugruppen (12, 14) in eine Montagelage verformt und nach Abschluss der Montage einen Hinterschnitt bildet, der einer Demontage der beiden Baugruppen (12, 14) entgegenwirkt, **dadurch gekennzeichnet, dass** die erste Baugruppe (12) einen Anschlag (38) aufweist, der bewegbar ist zwischen einer die Aufrechterhaltung des Hinterschnitts des Rastelements (42) unterstützenden Wirkstellung, in welcher das Rastelement (42) an dem Anschlag (38) anliegt und/oder in welcher das Rastelement (42) an den Anschlag (38) heran verformbar ist, und einer Demontagestellung, in welcher der Anschlag (38) bezogen auf die Wirkstellung weiter von dem Rastelement (42) beabstandet angeordnet ist und in welcher das Rastelement (42) zur Demontage der beiden Baugruppen (12, 14) in eine Demontagelage verformbar ist.

2. Verbindungsanordnung (10) nach Anspruch 1, **dadurch gekennzeichnet, dass** die erste Baugruppe (12) einen Anschlagträger (36) aufweist, an welchem der Anschlag (38) angeordnet ist, und einen Rastelementträger (40), an welchem das Rastelement (42) angeordnet ist, und dass der Rastelementträger (40) und der Anschlagträger (36) über einen Lagerbereich (44) relativ zueinander bewegbar verbunden sind.

3. Verbindungsanordnung (10) nach Anspruch 2, **dadurch gekennzeichnet, dass** der Lagerbereich (44) ein Schraubgewinde (46) und/oder eine Linearführung (81) aufweist oder aufweisen.

4. Verbindungsanordnung (10) nach Anspruch 2 oder 3, **dadurch gekennzeichnet, dass** die erste Baugruppe (12) eine Feder (90) aufweist, welche auf den Anschlagträger (36) und/oder den Rastelementträger (40) wirkt, sodass der Anschlag (38) in die Wirkstellung gedrängt wird.

5. Verbindungsanordnung (10) nach einem der vorstehenden Ansprüche, **dadurch gekennzeichnet, dass** die erste Baugruppe (12) eine Betätigungseinrichtung (74) aufweist, mit welcher der Anschlag (38) in die Demontagestellung überführbar und vorzugweise in der Demontagestellung fixierbar ist.

6. Verbindungsanordnung (10) nach Anspruch 5, **dadurch gekennzeichnet, dass** die Betätigungseinrichtung (74) einen Druckbolzen (76) oder Gewindebolzen (96) und/oder eine Druckhülse oder Gewindehülse (125) umfasst.

7. Verbindungsanordnung (10) nach einem der Ansprüche 2 bis 6, **dadurch gekennzeichnet, dass** der Anschlagträger (36) und/oder der Rastelementträger (40) mindestens eine Handhabungsfläche und/oder mindestens eine Werkzeugangriffsfläche (60, 62) aufweist oder aufweisen.

8. Verbindungsanordnung (10) nach einem der Ansprüche 2 bis 7, **dadurch gekennzeichnet, dass** die zweite Baugruppe (14) eine Anlagefläche (72) zur Anlage an dem Anschlagträger (36) oder zur Anlage an dem Rastelementträger (40) aufweist.

9. Verbindungsanordnung (10) nach Anspruch 8, **dadurch gekennzeichnet, dass** die Anlagefläche (72) bewegbar an der zweiten Baugruppe (14) angeordnet ist.

10. Verbindungsanordnung (10) nach einem der Ansprüche 2 bis 9, **dadurch gekennzeichnet, dass** der Anschlagträger (36) oder der Rastelementträger (40) an einem Rohrstutzen (28) angeordnet ist oder durch einen Rohrstutzen (28) bereitgestellt ist.

11. Verbindungsanordnung (10) nach einem der vorstehenden Ansprüche, **dadurch gekennzeichnet, dass** eine der beiden Baugruppen (12, 14) mindestens einen Anschlussstutzen (20) aufweist.

12. Verbindungsanordnung (10) nach einem der vorstehenden Ansprüche, **dadurch gekennzeichnet, dass** eine der beiden Baugruppen (12, 14) einen Behälter (22) mit mindestens einer Öffnung (26) zur Aufnahme eines Anschlussstutzens (20) oder eine Kupplung (108) mit mindestens einer Öffnung (112) zur Aufnahme eines Anschlussstutzens (20) aufweist.

13. Verbindungsanordnung (10) nach Anspruch 11 oder 12, **dadurch gekennzeichnet, dass** der Anschlussstutzen (20) eine Fluidleitung (30) aufweist, welche sich insbesondere entlang einer Montageachse (16) der Verbindungsanordnung (10) erstreckt.

14. Verbindungsanordnung (10) nach einem der vorstehenden Ansprüche, **dadurch gekennzeichnet, dass** die erste Baugruppe (12) einen Gegenhalter (48) zur Anlage an der zweiten Baugruppe (14) aufweist, und dass der Gegenhalter (48) bewegbar an der ersten Baugruppe (12) angeordnet ist.

15. Verbindungsanordnung (10) nach Anspruch 14, **dadurch gekennzeichnet, dass** der Gegenhalter (48) mindestens eine Handhabungsfläche (66) und/oder mindestens eine Werkzeugangriffsfläche (64) aufweist.

16. Verbindungsanordnung (10) nach einem der vorstehenden Ansprüche, **dadurch gekennzeichnet, dass** der Anschlag (38) in seiner Wirkstellung an einer zu dem Rastelement (42) benachbarten Abstützfläche (80) der ersten Baugruppe (12) und/oder an einem Abschnitt (58) des Rastelements (42) anliegt.

17. Verbindungsanordnung (10) nach einem der vorstehenden Ansprüche, **dadurch gekennzeichnet, dass** sich das Rastelement (42) während der Montage der beiden Baugruppen (12, 14) ausgehend von einem unverformten Ruhezustand des Rastelements in die Montagelage verformt, dass das Rastelement (42) - in der Demontagestellung des Anschlags (38) - ausgehend von dem unverformten Ruhezustand in die Demontagelage verformbar ist, und dass die Montagelage und die Demontagelage, bezogen auf den unverformten Ruhezustand, mit einander entgegengesetzt gerichteten Verformungen des Rastelements (42) einhergehen.

## Claims

1. A connection arrangement (10) having a first assembly (12) and a second assembly (14), an elastically deformable locking element (42) being disposed on the first assembly (12), which locking element (42) serves to releasably interlock the first assembly (12) and the second assembly (14) and, during mounting of the two assemblies (12, 14), deforms into a mounting condition and, after completion of the mounting process, forms an undercut which counteracts detachment of the two assemblies (12, 14),
**characterized in that** the first assembly (12) has a stop (38) which is movable between an operative position, which assists in maintaining the undercut of the locking element (42) and in which the locking element (42) bears against the stop (38) and/or in which the locking element (42) is deformable against the stop (38), and a detachment position, in which the stop (38), in relation to the operative position, is spaced further apart from the locking element (42) and in which the locking element (42) is deformable into a detachment condition for detachment of the two assemblies (12, 14).

2. The connection arrangement (10) as recited in claim 1,
**characterized in that** the first assembly (12) has a stop carrier (36) on which the stop (38) is disposed and a locking element carrier (40) on which the locking element (42) is disposed, and **in that** the locking element carrier (40) and the stop carrier (36) are connected via a bearing section (44) in such a way that they are movable relative to each other.

3. The connection arrangement (10) as recited in claim 2,
**characterized in that** the bearing section (44) includes or include a screw thread (46) and/or a linear guide (81).

4. The connection arrangement (10) as recited in claim 2 or 3,
**characterized in that** the first assembly (12) has a spring (90) which acts on the stop carrier (36) and/or on the locking element carrier (40) so that the stop (38) is urged into the operative position.

5. The connection arrangement (10) as recited in any of the preceding claims,
**characterized in that** the first assembly (12) has an actuating device (74) by which the stop (38) can be transferred to the detachment position and preferably fixed in the detachment position.

6. The connection arrangement (10) as recited in claim 5,
**characterized in that** the actuating device (74) includes a thrust bolt (76) or threaded bolt (96) and/or a thrust sleeve or threaded sleeve (125).

7. The connection arrangement (10) as recited in any of claims 2 through 6,
**characterized in that** the stop carrier (36) and/or the locking element carrier (40) has/have at least one manipulation surface and/or at least one tool engagement surface (60, 62).

8. The connection arrangement (10) as recited in any of claims 2 through 7,
**characterized in that** the second assembly (14) has an engagement surface (72) for engagement against the stop carrier (36) or for engagement against the locking element carrier (40).

9. The connection arrangement (10) as recited in claim 8,
**characterized in that** the engagement surface (72) is movably disposed on the second assembly (14).

10. The connection arrangement (10) as recited in any of claims 2 through 9,
**characterized in that** the stop carrier (36) or the locking element carrier (40) is disposed on a tubular member (28) or provided by a tubular member (28).

11. The connection arrangement (10) as recited in any of the preceding claims,
**characterized in that** one of the two assemblies (12, 14) has at least one connector stub (20).

12. The connection arrangement (10) as recited in any of the preceding claims,
**characterized in that** one of the two assemblies (12, 14) has a container (22) having at least one opening (26) for receiving a connector stub (20) or has a coupling (108) having at least one opening (112) for receiving a connector stub (20).

13. The connection arrangement (10) as recited in claim 11 or 12,
**characterized in that** the connector stub (20) has a fluid conduit (30) which extends in particular along a mounting axis (16) of the connection arrangement (10).

14. The connection arrangement (10) as recited in any of the preceding claims,
**characterized in that** the first assembly (12) has a counter-support (48) for engagement against the second assembly (14), and **in that** the counter-support (48) is movably disposed on the first assembly (12).

15. The connection arrangement (10) as recited in claim 14,
**characterized in that** the counter-support (48) has at least one manipulation surface (66) and/or at least one tool engagement surface (64).

16. The connection arrangement (10) as recited in any of the preceding claims,
**characterized in that** the stop (38), when in its operative position, bears against a supporting surface (80) of the first assembly (12) which supporting surface (80) is adjacent the locking element (42) and/or against a portion (58) of the locking element (42).

17. The connection arrangement (10) as recited in any of the preceding claims,
**characterized in that** during mounting of the two assemblies (12, 14), the locking element (42) deforms from an undeformed rest state of the locking element (42) into the mounting condition, **in that** when the stop (38) is in the detachment position, the locking element (42) is deformable from the undeformed rest state into the detachment condition, and **in that** the mounting condition and the detachment condition are associated with deformations of the locking element (42) in opposite directions relative to the undeformed rest state.

## Revendications

1. Système de liaison (10), avec un premier ensemble (12) et avec un deuxième ensemble (14), dans lequel un élément d'encliquetage (42) élastiquement déformable est disposé sur le premier ensemble (12), qui sert à l'encliquetage libérable du premier ensemble (12) et du deuxième ensemble (14) et qui, pendant un montage des deux ensembles (12, 14), se déforme dans une situation de montage et forme, une fois le montage terminé, un dégagement qui s'oppose à un démontage des deux ensembles (12, 14), **caractérisé en ce que** le premier ensemble (12) comporte une butée (38), qui est mobile entre une position active favorisant le maintien du dégagement de l'élément d'encliquetage (42), dans laquelle l'élément d'encliquetage (42) s'applique contre la butée (38) et/ou dans laquelle l'élément d'encliquetage (42) peut être déformé pour être rapproché de la butée (38), et une position de démontage, dans laquelle la butée (38) est disposée plus loin de l'élément d'encliquetage (42) par rapport à la position active et dans laquelle l'élément d'encliquetage (42) peut être déformé dans une situation de démontage pour le démontage des deux ensembles (12, 14).

2. Système de liaison (10) selon la revendication 1, **caractérisé en ce que** le premier ensemble (12) comporte un support de butée (36) sur lequel est disposée la butée (38) et un support d'élément d'encliquetage (40) sur lequel est disposé l'élément d'encliquetage (42), et **en ce que** le support d'élément d'encliquetage (40) et le support de butée (36) sont reliés de manière mobile l'un par rapport à l'autre par une zone de palier (44).

3. Système de liaison (10) selon la revendication 2, **caractérisé en ce que** la zone de palier (44) comporte ou comportent un filet de vis (46) et/ou un guidage linéaire (81) .

4. Système de liaison (10) selon la revendication 2 ou 3, **caractérisé en ce que** le premier ensemble (12) comporte un ressort (90), lequel agit sur le support de butée (36) et/ou le support d'élément d'encliquetage (40), de sorte que la butée (38) est poussée dans la position active.

5. Système de liaison (10) selon l'une quelconque des revendications précédentes, **caractérisé en ce que** le premier ensemble (12) comporte un dispositif d'actionnement (74), avec lequel la butée (38) peut être amenée dans la position de démontage et de préférence peut être fixée dans la position de démontage.

6. Système de liaison (10) selon la revendication 5, **caractérisé en ce que** le dispositif d'actionnement (74) comprend un boulon de pression (76) ou boulon fileté (96) et/ou une douille de pression ou douille filetée (125).

7. Système de liaison (10) selon l'une quelconque des revendications 2 à 6, **caractérisé en ce que** le support de butée (36) et/ou le support d'élément d'encliquetage (40) comporte ou comportent au moins une surface de manipulation et/ou au moins une surface d'attaque d'outil (60, 62).

8. Système de liaison (10) selon l'une quelconque des revendications 2 à 7, **caractérisé en ce que** le deuxième ensemble (14) comporte une surface d'appui (72) destinée à venir en appui sur le support de butée (36) ou à venir en appui sur le support d'élément d'encliquetage (40).

9. Système de liaison (10) selon la revendication 8, **caractérisé en ce que** la surface d'appui (72) est disposée de manière mobile sur le deuxième ensemble (14).

10. Système de liaison (10) selon l'une quelconque des revendications 2 à 9, **caractérisé en ce que** le support de butée (36) ou le support d'élément d'encliquetage (40) est disposé sur un embout tubulaire (28) ou est fourni par un embout tubulaire (28).

11. Système de liaison (10) selon l'une quelconque des revendications précédentes, **caractérisé en ce que** l'un des deux ensembles (12, 14) comporte au moins un embout de raccordement (20).

12. Système de liaison (10) selon l'une quelconque des revendications précédentes, **caractérisé en ce que** l'un des deux ensembles (12, 14) comporte un réservoir (22) avec au moins une ouverture (26) pour recevoir un embout de raccordement (20) ou un accouplement (108) avec au moins une ouverture (112) pour recevoir un embout de raccordement (20).

13. Système de liaison (10) selon la revendication 11 ou 12, **caractérisé en ce que** l'embout de raccordement (20) comporte un conduit de fluide (30), lequel s'étend notamment le long d'un axe de montage (16) du système de liaison (10).

14. Système de liaison (10) selon l'une quelconque des revendications précédentes, **caractérisé en ce que** le premier ensemble (12) comporte un contre-support (48) destiné à venir en appui sur le deuxième ensemble (14), et **en ce que** le contre-support (48) est disposé de manière mobile sur le premier ensemble (12).

15. Système de liaison (10) selon la revendication 14, **caractérisé en ce que** le contre-support (48) comporte au moins une surface de manipulation (66) et/ou au moins une surface d'attaque d'outil (64).

16. Système de liaison (10) selon l'une quelconque des revendications précédentes, **caractérisé en ce que** la butée (38), dans sa position active, s'applique contre une surface d'appui (80) du premier ensemble (12) voisine de l'élément d'encliquetage (42) et/ou sur une section (58) de l'élément d'encliquetage (42).

17. Système de liaison (10) selon l'une quelconque des revendications précédentes, **caractérisé en ce que** l'élément d'encliquetage (42) se déforme pendant le montage des deux ensembles (12, 14) à partir d'un état de repos non déformé de l'élément d'encliquetage dans la situation de montage, **en ce que** l'élément d'encliquetage (42) - dans la position de démontage de la butée (38) - est déformable à partir de l'état de repos non déformé dans la situation de démontage, et **en ce que** la situation de montage et la situation de démontage s'accompagnent, par rapport à l'état de repos non déformé, de déformations de l'élément d'encliquetage (42) dirigées dans des directions opposées.
